**Europäisches Patentamt**

**European Patent Office**

**Office européen des brevets**

(11) Veröffentlichungsnummer: **0 215 459**
A2

# (12) EUROPÄISCHE PATENTANMELDUNG

(21) Anmeldenummer: **86112674.6**

(22) Anmeldetag: **13.09.86**

(51) Int. Cl.⁴: **B 01 D 11/02**

(30) Priorität: **18.09.85 DE 3533202**

(43) Veröffentlichungstag der Anmeldung: **25.03.87**
**Patentblatt 87/13**

(84) Benannte Vertragsstaaten: **AT BE CH DE FR GB IT LI LU NL SE**

(71) Anmelder: **METALLGESELLSCHAFT AG,**
**Reuterweg 14 Postfach 3724, D-6000 Frankfurt/M.1 (DE)**

(72) Erfinder: **Wilhelm, Joachim, Dr., Friedrichstrasse 7,**
**D-6000 Frankfurt am Main (DE)**
Erfinder: **Reimert, Rainer, Dr., Unter der Hambach 15,**
**D-6270 Idstein (DE)**

(74) Vertreter: **Rieger, Harald, Dr., Reuterweg 14,**
**D-6000 Frankfurt am Main (DE)**

(54) **Verfahren zum Füllen und Entleeren eines unter ständigem Überdruck stehenden Behälters.**

(57) Das Einfüllen von körnigem Feststoff über eine Eintragsschleuse (2) in einen ständig unter Überdruck stehenden Behälter (1) und zum Abziehen von Feststoff über eine Austragsschleuse (1) und zum Abziehen von Feststoff über eine Austragsschleuse (3) aus dem Behälter geschieht dadurch,

(A) dass man die Eintragsschleuse (2), die entspannt und nach aussen geöffnet ist, mit Feststoff und praktisch vollständig mit Flüssigkeit füllt und verschliesst,

(B) dass man die Austragsschleuse (3), die geschlossen und mit Feststoff und Gas gefüllt ist und unter etwa dem im Behälter herrschenden Überdruck steht, über eine Gasleitung (4) mit der Eintragsschleuse verbindet und Druckausgleich herstellt,

(C) dass man die Flüssigkeit aus der Eintragsschleuse durch eine Flüssigkeitsleitung (10, 11, 12) in die Austragsschleuse leitet, dabei das Gas aus der Austragsschleuse durch die Gasleitung (4) in die Eintragsschleuse verdrängt und anschliessend die Flüssigkeitsleitung und die Gasleitung verschliesst,

(D) dass man den Feststoff von der Eintragsschleuse in den unter Überdruck stehenden Behälter leitet, wobei die Eintragsschleuse mit Gas aus dem Behälter gefüllt wird und unter Überdruck steht,

(E) dass man die Austragsschleuse entspannt, Flüssigkeit und Feststoff in eine Trennvorrichtung (8) leitet und die abgetrennte Flüssigkeit einem Vorratstank (20) zuführt,

(F) dass man die Austragsschleuse mit Flüssigkeit füllt und anschliessend die Gasleitung öffnet und Druckausgleich zwischen der Eintragsschleuse und der Austragsschleuse herstellt,

(G) dass man die Flüssigkeit von der Austragsschleuse über die geöffnete Flüssigkeitsleitung in die Eintragsschleuse leitet und dabei das Gas aus der Eintragsschleuse in die Austragsschleuse verdrängt,

(H) dass man die Flüssigkeitsleitung und die Gasleitung verschliesst und aus dem unter Überdruck stehenden Behälter über einen geöffneten Auslass Feststoff in die Austragsschleuse leitet und

(I) dass man die Eintragsschleuse entspannt und nach aussen öffnet und die Flüssigkeit aus der Eintragsschleuse in den Vorratstank (20) leitet.

0 215 459

METALLGESELLSCHAFT AG
Reuterweg 14

6000 Frankfurt/Main 1

17. September 1985
WGN/MHT (2340P)

Prov.Nr. 9346 L

0 215 459

## Verfahren zum Füllen und Entleeren eines unter ständigem Überdruck stehenden Behälters

Die Erfindung betrifft ein Verfahren zum Einfüllen von körnigem Feststoff über eine Eintragsschleuse in einen ständig unter Überdruck stehenden Behälter und zum Abziehen von Feststoff über eine Austragsschleuse aus dem Behälter.

Eintrags- und Austragsschleusen sind bekannt, wobei man das Bespannungsgas beim Entspannen der jeweiligen Schleuse in die Atmosphäre leiten oder aber einem Vorratsbehälter zuführen kann. Diese bekannten Schleusen brauchen jedoch eine relativ lange Zeit, bis sie bespannt oder entspannt sind. Der Erfindung liegt deshalb die Aufgabe zugrunde, das eingangs genannte Verfahren zu verbessern und vor allem kurze Be- und Entspannungszeiten zu erreichen. Erfindungsgemäß geschieht dies dadurch,

(A) daß man die Eintragsschleuse, die entspannt und nach außen geöffnet ist, mit Feststoff und praktisch vollständig mit Flüssigkeit füllt und verschließt,

(B) daß man die Austragsschleuse, die geschlossen und mit Feststoff und Gas gefüllt ist und unter etwa dem im Behälter herrschenden Überdruck steht, über eine Gasleitung mit der Eintragsschleuse verbindet und Druckausgleich herstellt,

(C) daß man die Flüssigkeit aus der Eintragsschleuse durch eine Flüssigkeitsleitung in die Austragsschleuse leitet, dabei das Gas aus der Austragsschleuse durch die Gasleitung in die Eintragsschleuse verdrängt und anschließend die Flüssigkeitsleitung und die Gasleitung verschließt,

(D) daß man den Feststoff von der Eintragsschleuse in den unter Überdruck stehenden Behälter leitet, wobei die Eintragsschleuse mit Gas aus dem Behälter gefüllt wird und unter Überdruck steht,

(E) daß man die Austragsschleuse entspannt, Flüssigkeit und Feststoff in eine Trennvorrichtung leitet und die abgetrennte Flüssigkeit einem Vorratstank zuführt,

(F) daß man die Austragsschleuse mit Flüssigkeit füllt und anschließend die Gasleitung öffnet und Durckausgleich zwischen der Eintragsschleuse und der Austragsschleuse herstellt,

(G) daß man die Flüssigkeit von der Austragsschleuse über die geöffnete Flüssigkeitsleitung in die Eintragsschleuse leitet und dabei das Gas aus der Eintragsschleuse in die Austragsschleuse verdrängt,

(H) daß man die Flüssigkeitsleitung und die Gasleitung verschließt und aus dem unter Überdruck stehenden Behälter über einen geöffneten Auslaß Feststoff in die Austragsschleuse leitet,

(I) daß man die Eintragsschleuse entspannt und nach außen öffnet und die Flüssigkeit aus der Eintragsschleuse in den Vorratstank leitet.

Beim erfindungsgemäßen Verfahren füllt man jeweils eine der beiden Schleusen mit Wasser auf, so daß zum Bespannen nur noch ganz wenig Gas gebraucht wird. Diese geringe Gasmenge ist auch schnell wieder entspannt, auch erfolgt eine schnelle Entspannung der fast inkompressiblen Flüssigkeit. Das Verfahren eignet sich insbesondere dann, wenn die Flüssigkeit, z.B. Wasser, ohne Schwierigkeiten sowohl mit dem in den Innenbehälter einzutragenden als auch mit dem daraus abzuziehenden Feststoff in Berührung kommen kann.

Zweckmäßigerweise ist das Volumen in der Eintragsschleuse und der Austragsschleuse etwa gleich, so daß die Flüssigkeitsmenge aus der Eintragsschleuse ungefähr zum Füllen der Austragsschleuse reicht. Vorteilhafterweise verwendet man als Gas zumindest überwiegend die Gasatmosphäre im Behälter, weil dieses Gas beim Öffnen des Behälters zur Eintragsschleuse oder Austragsschleuse in die jeweilige Schleuse strömt.

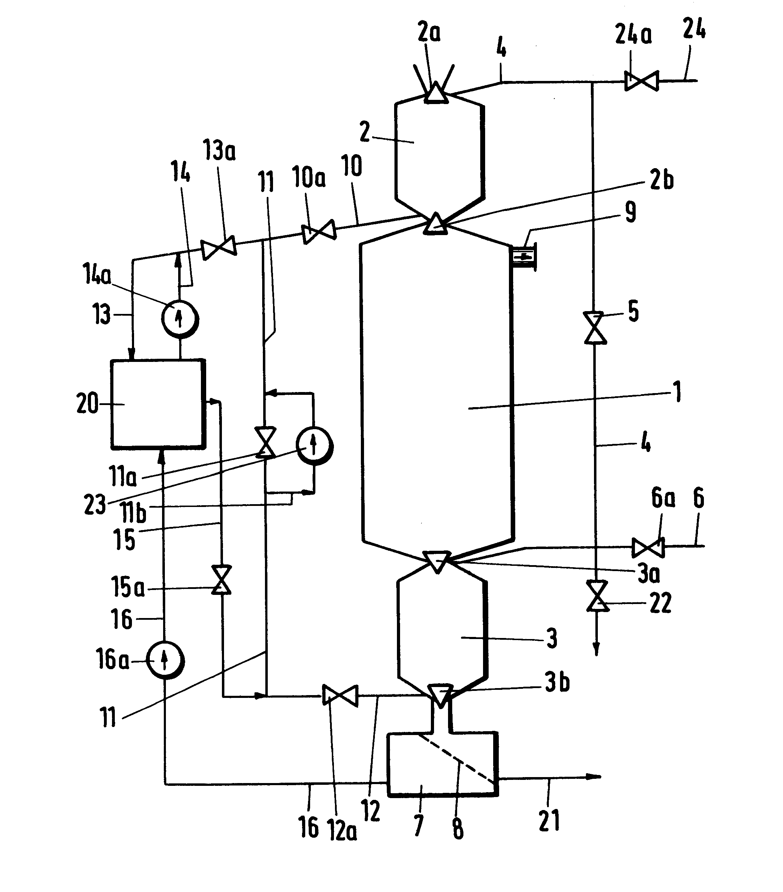

Eine Ausführungsform des Verfahrens wird mit Hilfe der Zeichnung erläutert.

Die Hauptteile der Anlage sind der unter ständigem Überdruck stehende Behälter 1, bei dem es sich um einen Reaktor handeln kann, sowie die Eintragsschleuse 2 und die Austragsschleuse 3. Zum Druckausgleich zwischen den beiden Schleusen ist eine Gasleitung 4 mit Ventil 5 vorhanden, eine Flüssigkeitsleitung setzt sich aus den Leitungsstücken 10, 11 und 12 zusammen. Ferner gibt es einen Vorratstank 20, an welchen Flüssigkeitsleitungen 13, 14, 15 und 16 angeschlossen sind. Zu jeder Schleuse gehören Einlaßventile 2a bzw. 3a und Auslaßventile 2b bzw. 3b. Unterhalb der Austragsschleuse 3 ist eine Trennvorrichtung 7 mit einem Sieb 8 angeordnet. Zum Behälter 1 gehört die Ableitung 9 für Produktgas.

Die Funktionsweise der Anlage ist folgende: Zunächst sei
davon ausgegangen, daß der Behälter 1 unter Überdruck
steht, die Eintragsschleuse 2 entspannt und nach außen geöffnet ist und die Austragsschleuse 3 mit Feststoff und
Gas gefüllt ist und unter etwa dem im Behälter 1 herrschenden Überdruck steht. Ventil 3a ist geschlossen. Nun
wird körniger Feststoff durch das geöffnete Ventil 2a in
die Eintragsschleuse gefüllt und anschließend Flüssigkeit
durch die Leitung 10 über das geöffnete Ventil 10a in solcher Menge in die Schleuse 2 gegeben, daß sie praktisch
vollständig gefüllt ist. Die Flüssigkeit kommt aus dem
Vorratstank 20 und strömt über die Leitung 14 mit der Pumpe 14a sowie durch das geöffnete Ventil 13a zur Leitung 10
und in die Schleuse 2. Danach werden die Ventile 2a und
10a geschlossen. Nunmehr wird durch Öffnen des Ventils 5
Druckausgleich zwischen den beiden Schleusen 2 und 3 hergestellt, wobei aufgrund der praktisch vollständigen Füllung der Schleuse 2 mit Feststoff und Flüssigkeit nur eine
ganz geringe Gasmenge durch die Leitung 4 in die Schleuse 2 strömt.

Flüssigkeit wird aus der Eintragsschleuse 2 in die Austragsschleuse 3 geleitet, diese Flüssigkeit fließt durch
die Leitungen 10, 11 und 12, wobei die jeweiligen Ventile 10a, 11a und 12a geöffnet sind. Im Mündungsbereich der
Leitung 10 zur Schleuse 2 hin ist ein nicht dargestelltes
Sieb angeordnet, welches verhindert, daß Feststoffe aus
der Schleuse 2 in die Leitung 10 übertreten. Durch die in
die Austragsschleuse 3 einfließende Flüssigkeit wird das
dort vorhandene Gas praktisch vollständig in die Leitung 4
und die Eintragsschleuse 2 hinein verdrängt. Wenn die Austragsschleuse 3 praktisch vollständig mit Flüssigkeit gefüllt ist, werden die Ventile 12a und 5 geschlossen.

In der Eintragsschleuse 2 herrscht der im Behälter 1 vorhandene Überdruck, die Feststoffe befinden sich in einer
Gasatmosphäre und weisen noch eine geringe Menge anhaftender Flüssigkeit auf. Nunmehr wird das Ventil 2b geöffnet,
so daß die Feststoffe in den Behälter 1 fließen können.
Dabei gelangt die im Behälter 1 vorhandene Gasatmosphäre
in einer gewissen Menge in die Eintragsschleuse 2. Der
Gasdruck im Behälter 1 und in der Schleuse 2 ist der gleiche.

Die Austragsschleuse 3, die mit Feststoff und Flüssigkeit
praktisch vollständig gefüllt ist, wird nunmehr auf etwa
1 bar entspannt, was durch Öffnen des Ventils 6a in der
Leitung 6 geschehen kann. Die Leitung 6 führt beispielsweise zu einem nicht dargestellten Gas-Vorratsbehälter.
Nach der Entspannung der Austragsschleuse 3 wird das Ventil 3b geöffnet und Flüssigkeit und Feststoff fließen in
die Trennvorrichtung 7. Das Sieb 8 hält die Feststoffe zurück, die über die Leitung 21 abgezogen werden. Die feststofffreie Flüssigkeit gelangt durch die Leitung 16 mit
Hilfe der Pumpe 16a in den Vorratstank 20. Die entspannte
und entleerte Austragsschleuse 3 wird nach Schließen des
Ventils 3b mit Flüssigkeit aus dem Vorratstank 20 gefüllt,
diese Flüssigkeit fließt durch die Leitung 15, das geöffnete Ventil 15a und die Leitung 12 mit dem geöffneten Ventil 12a. Durch die Flüssigkeit wird die in der Austragsschleuse 3 befindliche Luft verdrängt, sie strömt über das
geöffnete Ventil 22 ab. Nach Schließen der Ventile 12a und
22 wird Druckausgleich zwischen der Eintragsschleuse 2 und
der Austragsschleuse 3 durch Öffnen des Ventils 5 hergestellt. Um die Schleuse 3 nur mit einer Gasatmosphäre zu
füllen, wird die Flüssigkeit unter der Wirkung der Pumpe 23 vollständig in die Eintragsschleuse 2 gepumpt und
dabei die Gasatmosphäre aus der Schleuse 2 vollständig in die Austragsschleuse 3 verdrängt. Die Flüssigkeit strömt dabei durch die Leitung 12 mit dem geöffneten Ventil 12a, die Leitung 11 mit dem Bypass 11b sowie die Leitung 10 mit dem geöffneten Ventil 10a. Wenn sich in der Austragsschleuse 3 nur noch die Gasatmosphäre befindet, werden die Ventile 5 und 12a geschlossen. Nun kann nach Öffnen des Ventils 3a Feststoff, z.B. Reaktionsrückstand, aus dem Behälter 1 in die Austragsschleuse 3 abfließen, das Ventil 3b ist dabei geschlossen.

Die Eintragsschleuse 2 ist vollständig mit Flüssigkeit gefüllt und steht etwa unter dem im Behälter 1 herrschenden Überdruck. Man entspannt die Schleuse 2 und leitet die geringe Menge an Entspannungsgas durch die Leitung 24 über das geöffnete Ventil 24a zu einem nicht dargestellten Gas-Vorratsbehälter. An diesen Vorratsbehälter kann auch die Leitung 6 angeschlossen sein. Nach Entspannung in der Eintragsschleuse 2 wird das Ventil 2a geöffnet und die Flüssigkeit aus der Schleuse 2 in den Vorratstank 20 abgeleitet. Die Flüssigkeit fließt dabei über die Leitungen 10 und 13. Auf diese Weise ist der Ausgangszustand wieder erreicht.

Das Verfahren kann z.B. bei der Extraktionsbehandlung von Naturstoffen, z.B. Ölsaaten, Kaffee, Tee etc., Anwendung finden. Als Flüssigkeit verwendet man hierbei Wasser oder auch andere Flüssigkeiten, da das Anfeuchten der Naturstoffe vor der Extraktion mit geeigneten Lösungsmitteln zweckmäßig ist.

Darüber hinaus kann das Verfahren auch bei der Behandlung anderer Feststoffe in Druckreaktionen angewendet werden, sofern eine geeignete Flüssigkeit zur Verfügung steht und die Fest-Flüssig-Trennung, wie sie zuvor beschrieben wurde, mit vernünftigem Aufwand durchführbar ist.

PATENTANSPRÜCHE

1.  Verfahren zum Einfüllen von körnigem Feststoff über
    eine Eintragsschleuse in einen ständig unter Überdruck
    stehenden Behälter und zum Abziehen von Feststoff über
    eine Austragsschleuse aus dem Behälter, dadurch gekennzeichnet,

    (A) daß man die Eintragsschleuse, die entspannt und
        nach außen geöffnet ist, mit Feststoff und praktisch vollständig mit Flüssigkeit füllt und verschließt,

    (B) daß man die Austragsschleuse, die geschlossen und
        mit Feststoff und Gas gefüllt ist und unter etwa
        dem im Behälter herrschenden Überdruck steht, über
        eine Gasleitung mit der Eintragsschleuse verbindet
        und Druckausgleich herstellt,

    (C) daß man die Flüssigkeit aus der Eintragsschleuse
        durch eine Flüssigkeitsleitung in die Austragsschleuse leitet, dabei das Gas aus der Austragsschleuse durch die Gasleitung in die Eintragsschleuse verdrängt und anschließend die Flüssigkeitsleitung und die Gasleitung verschließt,

    (D) daß man den Feststoff von der Eintragsschleuse in
        den unter Überdruck stehenden Behälter leitet, wobei die Eintragsschleuse mit Gas aus dem Behälter
        gefüllt wird und unter Überdruck steht,

(E) daß man die Austragsschleuse entspannt, Flüssigkeit und Feststoff in eine Trennvorrichtung leitet und die abgetrennte Flüssigkeit einem Vorratstank zuführt,

(F) daß man die Austragsschleuse mit Flüssigkeit füllt und anschließend die Gasleitung öffnet und Druckausgleich zwischen der Eintragsschleuse und der Austragsschleuse herstellt,

(G) daß man die Flüssigkeit von der Austragsschleuse über die geöffnete Flüssigkeitsleitung in die Eintragsschleuse leitet und dabei das Gas aus der Eintragsschleuse in die Austragsschleuse verdrängt,

(H) daß man die Flüssigkeitsleitung und die Gasleitung verschließt und aus dem unter Überdruck stehenden Behälter über einen geöffneten Auslaß Feststoff in die Austragsschleuse leitet und

(I) daß man die Eintragsschleuse entspannt und nach außen öffnet und die Flüssigkeit aus der Eintragsschleuse in den Vorratstank leitet.

2. Verfahren nach Anspruch 1, dadurch gekennzeichnet, daß das Volumen in der Eintragsschleuse und der Austragsschleuse etwa gleich ist.

3. Verfahren nach Anspruch 1 oder 2, dadurch gekennzeichnet, daß als Gas zumindest überwiegend die Gasatmosphäre im Behälter verwendet wird.

4. Verfahren nach Anspruch 1 oder einem der folgenden, dadurch gekennzeichnet, daß als Flüssigkeit Wasser verwendet wird.